# EUROPEAN PATENT APPLICATION

(11) **EP 4 674 275 A1**
(43) Date of publication of application: **07.01.2026**
(21) Application number: 24764249.9
(22) Date of filing: 26.02.2024
(51) Int. Cl.: A23F 5/16, A47J 42/36, A47J 42/38, A23F 5/24

(54) **DUAL GRINDER FOR SEPARATING AND REMOVING SILVER SKINS LOCATED AT CENTER OF COFFEE BEANS AND GRINDING COFFEE BEANS**

(30) Priority: 02.03.2023 KR 20230027675; 16.10.2023 KR 20230137749
(71) Applicant: Kim, Myo Woong, Seongnam-si, Gyeonggi-do 13595 (KR)
(72) Inventor: Kim, Myo Woong, Seongnam-si, Gyeonggi-do 13595 (KR)
(74) Representative: ABG Intellectual Property Law, S.L.
(86) International application number: PCT/KR2024/095439
(87) International publication number: WO 2024/181850

(57) **Abstract**

The present invention relates to a grinder for separating and removing silver skins contained in coffee beans in order to preserve the original taste and maintain the freshness of the coffee beans. In addition, the present invention can improve the original taste and flavor of coffee by separating and removing silver skins located at the center cut of coffee beans. In addition, the present invention can quickly and effectively separate and remove silver skins contained in coffee beans without large-scale equipment and complex processing. In addition, the present invention can maintain the freshness and extend the shelf life of coffee beans by separating and removing silver skins located at the center cut of the coffee beans. In addition, the present invention can extract coffee with excellent flavor by removing coffee flavor degeneration factors that can be generated by the mixing of fibers of coffee beans and coffee oils. In addition, the present invention can increase the amount of coffee extracted and reduce the material costs of coffee beans by separating and removing silver skins located at the center cut of the coffee beans.

## Description

### [Technical Field]

The present invention relates to a grinder for separating and removing silverskin contained in coffee beans in order to implement the inherent taste and maintain the freshness of coffee beans. More specifically, the present invention relates to a dual grinder for separating, removing silverskin located at the center of coffee beans, and grinding coffee beans.

### [Background Art]

Generally, the term 'silver skin' refers to 'coffee peel and impurities of coffee'.

Silverskin is a type of byproduct that occurs during the roasting process and is not harmful to the human body. However, the reason for removing silverskin is that although silverskin itself is harmless to the human body, it can have various effects on the taste of coffee.

The silverskin on the outer surface of coffee beans can be separated and removed during the Roasting process, but the silverskin in the center cut crease of the coffee beans is difficult to separate.

In addition, in a low-temperature roasting process, the amount of silverskin is large because the crease of the coffee bean expands less, and in a high-temperature roasting process, there is a characteristic that a small amount of silverskin remains due to the expansion of the coffee bean crease.

In addition, silverskin can affect the taste of coffee as it weakens components of the pentanedione (butter), vinylguaiacol (smoky), and furfural (caramel) types, and contains a lot of substances such as nonenal, hexanal, decadienal, and isovaleraldehyde.

Although a conclusion cannot be drawn as to whether this effect on coffee taste is positive or negative because it depends on the subjective preference of the consumer, silverskin may not contain as many flavor compounds as the coffee bean itself, so an excessive amount of silverskin in the coffee bean can have a negative effect on the taste and aroma of the coffee.

In addition, in the case of a light roasting process (Nordic roasting and light roasting), the silverskin is less separated than in medium roasting and dark roasting, which can have a negative impact on the taste and aroma of the coffee.

As a technology to solve the above problems, the technology disclosed in Patent Document 1 has been proposed.

Referring to Patent Document 1, it is disclosed that, "Provided is a drum combustion gas discharge control device of a coffee roaster having a structure in which the discharge of combustion gas is not affected by silverskin discharged together with combustion gas from a drum that can optimally adjust the amount of air flow in the drum without being constrained by the change in the length of the flue according to the installation environment of the coffee roaster."

However, in the technology of the disclosed Patent Document 1, the loss of the coffee's inherent aroma is high during the process of grinding the coffee beans, and the hassle of the work is also occurring.

Therefore, the present invention intends to provide a grinder that effectively separates and removes silverskin contained in coffee beans within a short time without large-scale equipment and complex processing.

### [Prior Art Documents]

### [Patent Documents]

(Patent Document 1) Patent Document 1: Korean Registered Patent Publication No. 10-2017-0110944 (Registered on Oct. 12, 2017)

### [Detailed Description of the Invention]

### [Technical Problem]

The present invention is to solve the above-mentioned problems, and its purpose is to provide a grinder that implements the inherent taste and maintains the freshness of coffee, and effectively separates and removes silverskin contained in coffee beans within a short time without large-scale equipment and complex processing.

### [Solution to Problem]

The present invention provides a grinder for separating and removing silverskin contained in coffee beans, comprising: an inlet into which coffee beans are introduced; first to fourth grinding rollers for grinding the coffee beans introduced into the inlet; an air nozzle for separating silverskin from the coffee beans by spraying air onto the coffee beans ground by utilizing the first grinding roller and the second grinding roller; an air supply tube for supplying air to the air nozzle; an air valve for adjusting the amount of air sprayed from the air nozzle; a blocking membrane for allowing the coffee beans diffused by the air nozzle to go down to the next grinding roller; a collection opening for collecting the silverskin separated from the coffee beans; a dust collection tube for collecting the silverskin separated from the coffee beans by utilizing a cyclone motor; a dust collection valve for adjusting the suction amount of the dust collection tube; and a transfer motor for transferring the coffee beans ground by the fourth grinding roller.

In addition, the present invention provides a grinder for separating and removing silverskin contained in coffee beans, wherein the grinding rollers comprise a first grinding roller that grinds coffee beans in an impact manner by making a groove in a vertical blade, and second to fourth grinding rollers that adjust the grinding thickness of the coffee beans.

In addition, the present invention provides a grinder for separating and removing silverskin contained in coffee beans, wherein the grinding rollers are such that two rollers each can engage and rotate, and the gap between the two rollers each can be adjusted.

In addition, the present invention provides a grinder for separating and removing silverskin contained in coffee beans, wherein the air nozzle is equipped with a slit-type nozzle on the front and a mist nozzle on the top.

In addition, the present invention provides a grinder for separating and removing silverskin contained in coffee beans, wherein the slit-type nozzle is designed with a curved air outlet to spray air over a wide area.

In addition, the present invention provides a grinder for separating and removing silverskin contained in coffee beans, wherein the mist nozzle is such that air is sprayed at an angle of 15° to 16° in order to increase the residence time of the coffee beans.

In addition, the present invention provides a grinder for separating and removing silverskin contained in coffee beans, wherein a double-sealed tube is additionally equipped, connected with the air supply tube and the dust collection tube, to enable air supply and collection of the silverskin of the coffee beans.

In addition, the present invention provides a grinder for separating and removing silverskin contained in coffee beans, wherein the blocking membrane is installed obliquely so that the coffee beans can move to the next grinding roller.

In addition, the present invention provides a grinder for separating and removing silverskin contained in coffee beans, wherein the transfer motor is additionally equipped with a collection opening using specific gravity in order to remove the silverskin remaining in the coffee beans.

### [Advantageous Effects of Invention]

The present invention can provide a grinder that effectively separates and removes silverskin contained in coffee beans within a short time without large-scale equipment and complex processing.

The present invention can improve the inherent taste and flavor of coffee by separating and removing the silverskin located at the center cut position of the coffee beans.

In addition, the present invention can effectively separate and remove silverskin contained in coffee beans within a short time without large-scale equipment and complex processing.

In addition, the present invention can maintain the freshness of coffee beans and extend the shelf life by separating and removing the silverskin located at the center cut of the coffee beans.

In addition, the present invention can extract coffee with excellent flavor by removing the deterioration factors of coffee taste that can be caused by the mixture of fiber of coffee beans and coffee oil, etc.

In addition, the present invention can increase the extraction amount of coffee and reduce the material cost of coffee beans by separating and removing the silverskin located at the center cut of the coffee beans.

### [Brief Description of Drawings]

The accompanying drawings are for explaining the content of the present invention in more detail to a person of ordinary skill in the corresponding technical field, and the technical idea of the present invention is not limited thereto.
FIG. 1 is a drawing showing an external appearance example of a grinder for separating and removing silverskin contained in coffee beans according to an embodiment of the present invention.
FIG. 2 is a drawing showing the internal structure of a grinder for separating and removing silverskin contained in coffee beans according to an embodiment of the present invention.
FIG. 3 is a drawing showing the structure of an air nozzle included in a grinder for separating and removing silverskin contained in coffee beans according to an embodiment of the present invention.
FIG. 4 is a drawing showing the operating principle of an air nozzle included in a grinder for separating and removing silverskin contained in coffee beans according to an embodiment of the present invention.
FIG. 5 is a drawing showing the operating principle of a grinder for separating and removing silverskin contained in coffee beans according to an embodiment of the present invention.
FIG. 6 is a drawing showing coffee beans ground using a grinder for separating and removing silverskin contained in coffee beans according to an embodiment of the present invention.
FIG. 7 is a drawing showing a sensory evaluation of coffee extracted using a grinder for separating and removing silverskin contained in coffee beans according to an embodiment of the present invention.
FIG. 8 is a drawing showing the consumer preference for coffee extracted using a grinder for separating and removing silverskin contained in coffee beans according to an embodiment of the present invention.

### [Best Mode for Carrying Out the Invention]

Hereinafter, a grinder for separating and removing silverskin contained in coffee beans according to an embodiment of the present invention will be described in detail, but the scope of rights of the grinder for separating and removing silverskin contained in coffee beans is not limited by the following description.

Throughout the Specification, when a certain part is said to "include" a certain component, it means that it can further include other components, not excluding other components, unless there is a particularly contrary description.

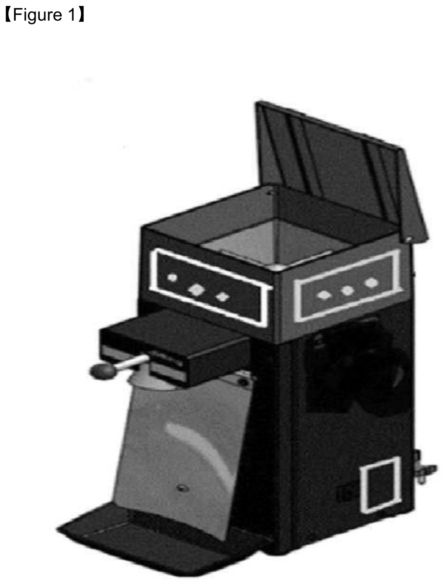

FIG. 1 is a drawing showing an external appearance example of a grinder for separating and removing silverskin contained in coffee beans according to an embodiment of the present invention.

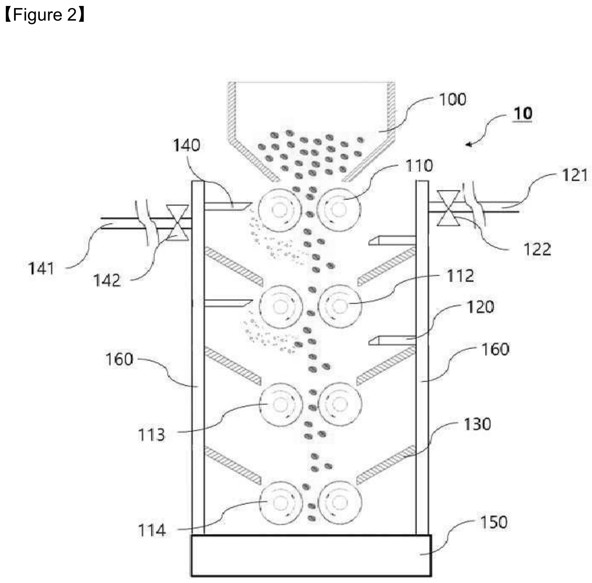

FIG. 2 is a drawing showing the internal structure of a grinder for separating and removing silverskin contained in coffee beans according to an embodiment of the present invention.

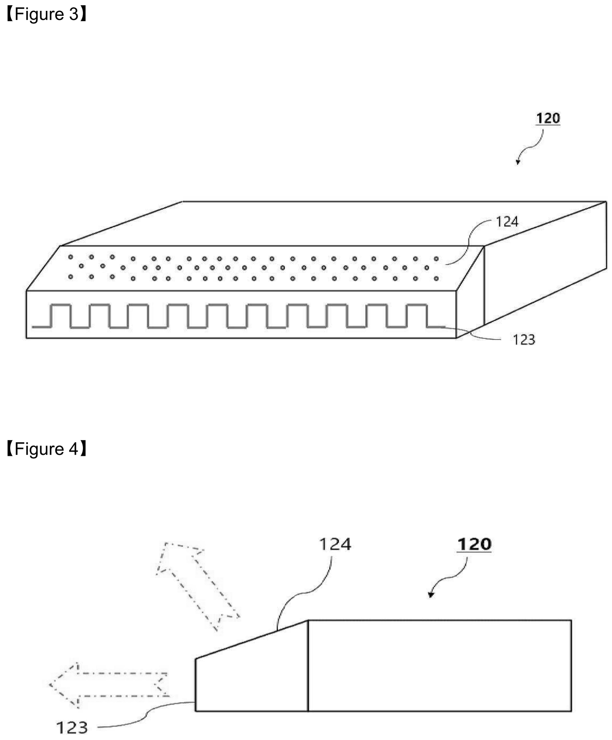

FIG. 3 is a drawing showing the structure of an air nozzle included in a grinder for separating and removing silverskin contained in coffee beans according to an embodiment of the present invention.

FIG. 4 is a drawing showing the operating principle of an air nozzle included in a grinder for separating and removing silverskin contained in coffee beans according to an embodiment of the present invention.

Referring to FIG. 1 to 4, the grinder for separating and removing silverskin contained in coffee beans (10) according to an embodiment of the present invention may include an inlet (100), a first grinding roller (110), a second grinding roller (112), a third grinding roller (113), a fourth grinding roller (114), an air nozzle (120), an air supply tube (121), an air valve (122), a blocking membrane (130), a collection opening (140), a dust collection tube (141), a dust collection valve (142), and a transfer motor (150).

The inlet (100) is for introducing coffee beans, and as shown in the attached FIG. 2, it may be formed in a hopper shape with a wide upper side and a narrow lower side.

In addition, the inlet (100) may be made of a transparent material so that the introduced coffee beans can be seen well, and the coffee beans can be replaced and managed hygienically.

In addition, the inlet (100) may be additionally equipped with a temperature-maintaining member as needed to maintain the freshness of the introduced coffee beans.

In addition, the inlet (100) may be additionally equipped with a cover, and the cover may be located on the upper part of the coffee bean inlet (100) to prevent contamination of the introduced said coffee beans from various external impurities and contaminants.

In addition, the cover may additionally include a UV lamp on the inner ceiling to suppress bacteria generated on the coffee beans.

Here, a UV lamp is a lamp that generates ultraviolet ray and is used for accelerated testing of ultraviolet degradation of materials, or for sterilization, etc. In addition, it has the characteristic of being completely absorbed by short wavelengths, sterilization, and the ozone layer and atmosphere, and not only simply heating objects but also causing interaction of molecules in the body.

The first grinding roller (110), the second grinding roller (112), the third grinding roller (113), and the fourth grinding roller (114) can grind the coffee beans introduced into the inlet (100).

In addition, in the first grinding roller (110), the second grinding roller (112), the third grinding roller (113), and the fourth grinding roller (114), two rollers each can engage and rotate, and the gap between the two rollers each can be adjusted.

The first grinding roller (110) can grind coffee beans in an impact manner by making a groove in a vertical blade.

The second grinding roller (112), the third grinding roller (113), and the fourth grinding roller (114) can grind by adjusting the grinding thickness of the coffee beans.

In addition, since the particle size distribution of the coffee beans ground using the second grinding roller (112), the third grinding roller (113), and the fourth grinding roller (114) is diverse, the high flavor of the extracted coffee can be emphasized.

The air nozzle (120) can separate and remove silverskin from the coffee beans by spraying air onto the coffee beans ground by utilizing the first grinding roller (111) and the second grinding roller (112).

In addition, the air nozzle (120) may be equipped with a slit-type nozzle (123) on the front and a mist nozzle (124) on the top.

The slit-type nozzle (123) can spray air over a wide area by designing the air outlet to be curved.

The mist nozzle (124) can have air sprayed at an angle of 15° to 16° in order to increase the residence time of the coffee beans.

The air supply tube (121) can supply air to the air nozzle (120).

The air valve (122) can adjust the amount of air sprayed from the air nozzle (120).

The blocking membrane (130) may be installed obliquely to allow the coffee beans diffused by the air nozzle (120) to go down to the second grinding roller (112), the third grinding roller (113), and the fourth grinding roller (114).

The collection opening (140) can collect the silverskin separated from the coffee beans.

The dust collection tube (141) can collect the silverskin separated from the coffee beans by utilizing a cyclone motor.

The dust collection valve (142) can adjust the suction amount of the dust collection tube (141).

The transfer motor (150) can transfer the coffee beans ground by the fourth grinding roller (114).

In addition, the transfer motor (150) may be additionally equipped with a collection opening using specific gravity in order to remove the silverskin remaining in the coffee beans.

The grinder for separating and removing silverskin contained in coffee beans (10) of the present invention may be additionally equipped with a double-sealed tube (160) connected to the air supply tube (121) and the dust collection tube (141) to enable air supply and collection of the silverskin of the coffee beans.

In addition, the grinder for separating and removing silverskin contained in coffee beans (10) of the present invention may be additionally equipped with a discharge outlet.

In addition, the discharge outlet can adjust the discharge amount of the coffee beans by adjusting the width of the discharge part according to the user's choice, and is detachable, so that the grinder for separating and removing silverskin contained in coffee beans (10) of the present invention can be managed and cleaned hygienically.

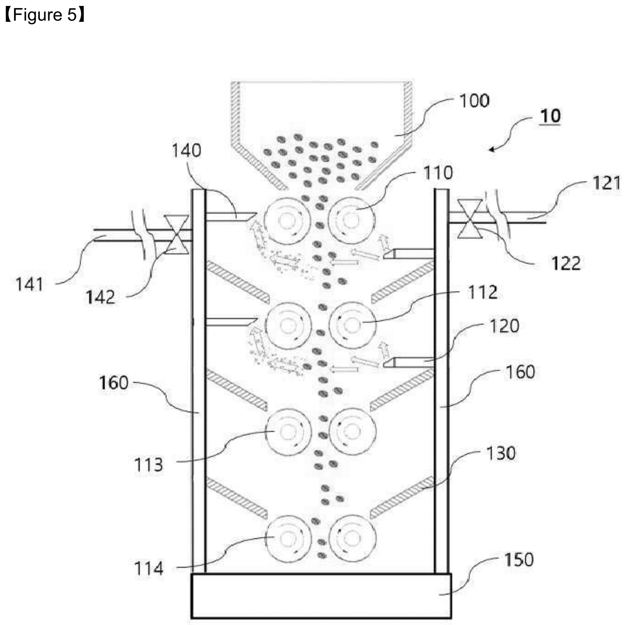

FIG. 5 is a drawing showing the operating principle of a grinder for separating and removing silverskin contained in coffee beans according to an embodiment of the present invention.

Referring to FIG. 5, the operating principle of the grinder for separating and removing silverskin contained in coffee beans (10) according to an embodiment of the present invention is that the coffee beans stored in the inlet (100) can be ground by utilizing the first grinding roller (110) and second grinding roller (112) so that silverskin can be separated and removed from the coffee beans.

By spraying moisture-removed air supplied from the air supply tube (121) onto the ground coffee beans through the air nozzle (120), the silverskin is separated and removed from the coffee beans, and because the coffee beans are relatively heavy, they fall down without being affected by the sprayed air, and the relatively light silverskin can be collected through the collection opening (140).

In addition, the coffee beans from which silverskin has been separated and removed are ground again by utilizing the third grinding roller (113) and the fourth grinding roller (114), and the re-ground coffee beans are transferred through the transfer motor (150), and after finally removing the remaining silverskin of the coffee beans at the collection opening using the specific gravity, they can be discharged to the discharge outlet.

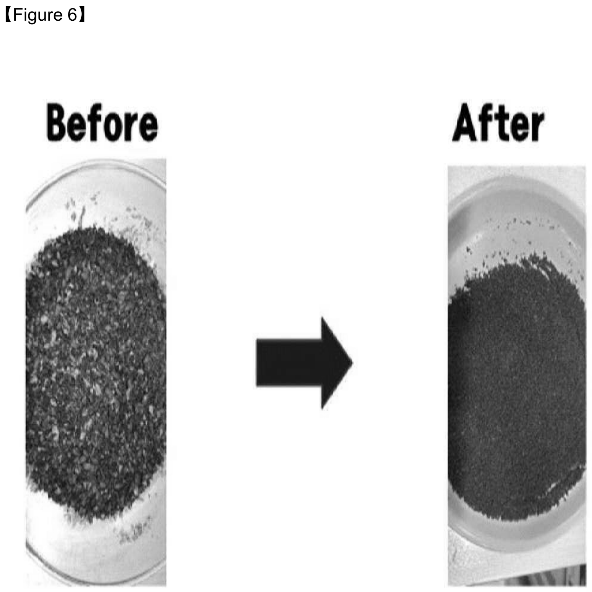

FIG. 6 is a drawing showing coffee beans ground using a grinder for separating and removing silverskin contained in coffee beans according to an embodiment of the present invention.

Referring to FIG. 6, the coffee beans ground using the grinder for separating and removing silverskin contained in coffee beans (10) according to an embodiment of the present invention are obtained by first and second grinding of coffee beans containing silverskin by utilizing the first grinding roller (110) and the second grinding roller (112), separating and removing the silverskin contained in the coffee beans from the coffee beans by using the air nozzle (120) that sprays moisture-removed air onto the first and second ground coffee beans, and grinding again with the third grinding roller (113) and fourth grinding roller (114) to generate uniform ground particles of the ground coffee beans.

In addition, the coffee beans ground using the grinder for separating and removing silverskin contained in coffee beans (10) of the present invention can provide users with the inherent taste of coffee and fresh coffee, and because the silverskin contained in the coffee beans has been separated and removed, even the off-flavors of the coffee can be removed.

Hereinafter, the present invention will be described in more detail through specific experimental examples. However, these experimental examples are for illustratively explaining the present invention, and the scope of the present invention is not limited to these experimental examples.

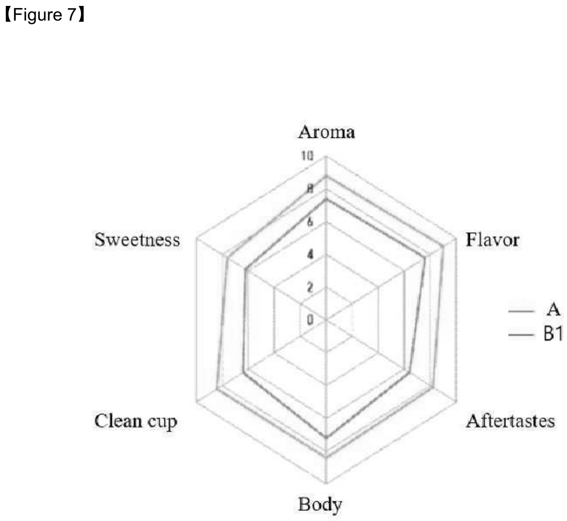

FIG. 7 is a drawing showing a sensory evaluation of coffee extracted using a grinder for separating and removing silverskin contained in coffee beans according to an embodiment of the present invention.

Referring to FIG. 7, in order to check the comparison and evaluation of Aroma, Flavor, Aftertastes, Body, Clean cup, and Sweetness, etc., of coffee extracted using the grinder for separating and removing silverskin contained in coffee beans (10) according to an embodiment of the present invention and coffee extracted without separating and removing silverskin, an evaluation test was conducted through the following examples.

### [Example 1] Preparation of coffee (A) extracted by separating and removing silverskin contained in coffee beans

Coffee (A) was prepared by extracting using the grinder for separating and removing silverskin contained in coffee beans (10) of the present invention.

### [Comparative Example 1] Preparation of coffee (B1) extracted without separating and removing silverskin from coffee beans

Conducted in the same manner as Example 1, but coffee (B1) was prepared, which was extracted without separating and removing silverskin from coffee beans, without operating the air nozzle (120) and the collection opening (140) included in the grinder for separating and removing silverskin contained in coffee beans (10) of the present invention.

### [Experimental Example 1] Sensory evaluation of coffee

In conducting the sensory evaluation, the evaluation was conducted on 100 men and women (20 to 50 years old).

Since the sensory evaluation of coffee is made by human senses and subjective judgment, personal opinions were prohibited during the sensory evaluation so as not to influence others, people undergoing dental treatment were excluded as they could not perform the sensory evaluation properly, and for an accurate evaluation, no information was given in advance about the separation and removal of silverskin contained in coffee beans. The two types of coffee shown in Example 1 and Comparative Example 1 were tasted respectively, and after consuming one coffee, the mouth was necessarily rinsed with water, and after at least 3 minutes had passed, the next coffee was to be evaluated.

The sensory evaluation method was to evaluate the degree of preference for items such as Aroma, Flavor, Aftertastes, Body, Clean cup, and Sweetness so that a higher score is better, with a maximum of 10 points and a minimum of 1 point to be awarded.

The results for the 100 evaluation subjects were arithmetically evaluated, and the calculated values are shown in [Table 1] below.

**[Table 1]**

| Category | Example 1 (A) | Comparative Example 1 (B1) |
|---|---|---|
| Aroma | 8.9 | 7.6 |
| Flavor | 8.7 | 7.8 |
| Aftertastes | 8.2 | 6.2 |
| Body | 8.3 | 7.4 |
| Clean cup | 8.3 | 6.3 |
| Sweetness | 7.9 | 6.1 |

As can be confirmed from said [Table 1], the coffee extracted by separating and removing silverskin contained in coffee beans according to the present invention provides consumers with coffee in which the inherent taste and flavor of coffee are improved by separating and removing the silverskin located at the center cut position of the coffee beans, thereby it was found that the sensory evaluation of consumers is high.

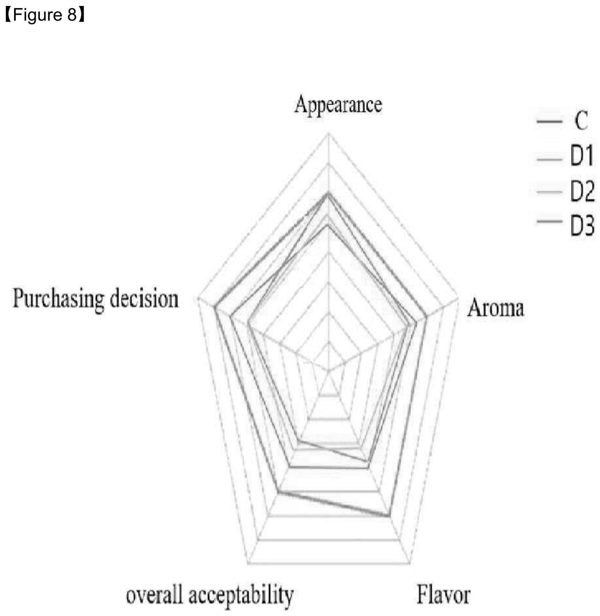

FIG. 8 is a drawing showing the consumer preference for coffee extracted using a grinder for separating and removing silverskin contained in coffee beans according to an embodiment of the present invention.

Referring to FIG. 8, in order to check consumer preferences such as Aroma, Flavor, Appearance, Purchasing decision, and overall acceptability of coffee extracted using the grinder for separating and removing silverskin contained in coffee beans (10) according to an embodiment of the present invention, an evaluation test was conducted through the following examples.

### [Example 2] Preparation of coffee (C) extracted using a grinder for separating and removing silverskin contained in coffee beans

An evaluation of a total of 5 items, including Aroma, Flavor, Appearance, Purchasing decision, and overall acceptability, was conducted on coffee (C) extracted using the grinder for separating and removing silverskin contained in coffee beans (10) of the present invention.

### [Comparative Example 2] Coffee of company A (D1)

An evaluation of a total of 5 items, including Aroma, Flavor, Appearance, Purchasing decision, and overall acceptability, was conducted on the coffee of company A (D1).

### [Comparative Example 3] Coffee of company B (D2)

An evaluation of a total of 5 items, including Aroma, Flavor, Appearance, Purchasing decision, and overall acceptability, was conducted on the coffee of company B (D2).

### [Comparative Example 4] Coffee of company C (D3)

An evaluation of a total of 5 items, including Aroma, Flavor, Appearance, Purchasing decision, and overall acceptability, was conducted on the coffee of company C (D3).

### [Experimental Example 2] Consumer preference evaluation of coffee

In conducting the consumer preference evaluation, the evaluation was conducted on 100 men and women (20 to 50 years old).

Since the consumer preference evaluation of coffee is made by human senses and subjective judgment, personal opinions were prohibited during the sensory evaluation so as not to influence others, people undergoing dental treatment were excluded as they could not perform the sensory evaluation properly, and for an accurate evaluation, no information was given in advance about the separation and removal of silverskin contained in coffee beans. The 4 types of coffee shown in Example 2 and Comparative Examples 2 to 4 were tasted respectively, and after consuming one coffee, the mouth was necessarily rinsed with water, and after at least 3 minutes had passed, the next coffee was to be evaluated.

Consumer preference was evaluated for items such as Aroma, Flavor, Appearance, Purchasing decision, and overall acceptability, so that a higher score is better for the degree of preference, with a maximum of 10 points and a minimum of 1 point to be awarded.

The results for the 100 evaluation subjects were arithmetically evaluated, and the calculated values are shown in [Table 2] below.

**[Table 2]**

| Category | Example 2(C) | Comp. Ex. 2(D1) | Comp. Ex. 3(D2) | Comp. Ex. 4(D3) |
|---|---|---|---|---|
| Appearance | 8.1 | 8.1 | 7.3 | 6.9 |
| Aroma | 8.1 | 6.9 | 6.8 | 7.3 |
| Flavor | 8.1 | 5.9 | 5.1 | 6.2 |
| overall acceptability | 7.1 | 6.1 | 5.1 | 6.1 |
| Purchasing decision | 9.1 | 7.9 | 6.9 | 8.1 |

As can be confirmed from said [Table 2], the coffee (C) extracted using the grinder for separating and removing silverskin contained in coffee beans (10) according to the present invention is superior in Aroma, Flavor, Appearance, and overall acceptability, etc., than the coffees of companies A, B, and C sold on the market, thus it was found that the probability of future repurchase or Purchasing decision is high.

A person skilled in the technical field to which the present invention belongs will be able to understand that the present invention can be implemented in other specific forms without changing its technical idea or essential features. Therefore, it should be understood that the embodiments described above are illustrative in all respects and not limiting. The scope of the present invention is indicated by the claims to be described later rather than the detailed description above, and all changes or modified forms derived from the meaning and scope of the claims and their equivalent concepts should be interpreted as being included in the scope of the present invention.

### [Description of Reference Numerals]

10 : grinder for separating and removing silverskin contained in coffee beans
100 : inlet
110 : first grinding roller
112 : second grinding roller
113: third grinding roller
114 : fourth grinding roller
120 : air nozzle
121 : air supply tube
122 : air valve
130 : blocking membrane
140 : collection opening
141 : dust collection tube
142 : dust collection valve
150 : transfer motor
160 : double-sealed tube

## Claims

1. A dual grinder for separating and removing silverskin located at the center of coffee beans and for grinding coffee beans, comprising:
an inlet into which coffee beans are introduced;
first to fourth grinding rollers for grinding the coffee beans introduced into the inlet;
an air nozzle for separating silverskin from the coffee beans by spraying air onto the coffee beans ground by utilizing the first grinding roller and the second grinding roller;
an air supply tube for supplying air to the air nozzle;
an air valve for adjusting the amount of air sprayed from the air nozzle;
a blocking membrane for allowing the coffee beans diffused by the air nozzle to go down to the next said grinding roller;
a collection opening for collecting the silverskin separated from the coffee beans;
a dust collection tube for collecting the silverskin separated from the coffee beans by utilizing a cyclone motor;
a dust collection valve for adjusting the suction amount of the dust collection tube;
and
a transfer motor for transferring the coffee beans ground by the fourth grinding roller.

2. The dual grinder of claim 1,
wherein the grinding rollers comprises a first grinding roller that grinds coffee beans in an impact manner by making a groove in a vertical blade, and second to fourth grinding rollers that adjust the grinding thickness of the coffee beans.

3. The dual grinder of claim 1,
wherein the grinding rollers are **characterized in that** two rollers each can engage and rotate, and the gap between the two rollers each can be adjusted.

4. The dual grinder of claim 1,
wherein the air nozzle is equipped with a slit-type nozzle on the front and a mist nozzle on the top.

5. The dual grinder of claim 4,
wherein the slit-type nozzle is designed with a curved air outlet to spray air over a wide area.

6. The dual grinder of claim 4,
wherein the mist nozzle is **characterized in that** air is sprayed at an angle of 15° to 16° in order to increase the residence time of the coffee beans.

7. The dual grinder of claim 1,
wherein a double-sealed tube is additionally equipped, connected with the air supply tube and the dust collection tube, to enable air supply and collection of the silverskin of the coffee beans.

8. The dual grinder of claim 1,
wherein the blocking membrane is installed obliquely so that the coffee beans can move to the next said grinding roller.

9. The dual grinder of claim 1,
wherein the transfer motor is additionally equipped with a collection opening using specific gravity in order to remove the silverskin remaining in the coffee beans.
